# EUROPÄISCHE PATENTSCHRIFT

(11) **EP 0 490 871 B1**
(45) Veröffentlichungstag und Bekanntmachung des Hinweises auf die Patenterteilung: **04.10.1995**
(21) Anmeldenummer: 91890303.0
(22) Anmeldetag: 11.12.1991
(51) Int. Cl.: B60J 5/04, B60J 5/06, B61D 19/00

(54) **Doppelschwenkschiebetür**
Swinging and sliding twin door
Double porte pivotante coulissante

(30) Priorität: 14.12.1990 AT 2546/90
(43) Veröffentlichungstag der Anmeldung: 17.06.1992
(73) Patentinhaber: IFE Industrie-Einrichtungen Fertigungs-Aktiengesellschaft, A-3340 Waidhofen a.d. Ybbs (AT)
(72) Erfinder: Fink, Martin, A-3340 Waidhofen a.d. Ybbs (AT)
(74) Vertreter: Barger, Werner, Dipl.-Ing.

(56) Entgegenhaltungen:
- EP-A- 0 134 971
- AT-B- 387 620
- FR-A- 2 427 457

## Beschreibung

Die Erfindung bezieht sich auf eine Schwenkschiebetür, insbesondere für Fahrzeuge mit einer Tragschiene und einem, auf dieser gleitenden, am Türblatt mittels einer Konsole befestigten Schlitten, sowie mit einem parallel zur Tragschiene angeordneten Linearantrieb, dessen Triebansatz durch ein Bewegungsübertragungselement mit dem Schlitten verbunden ist (Schwenkschiebetür, die z.B. nach der FR-A-2 427 457 gattungsgemäß ausgebildet ist).

Die bekannte Bauart führt bei Doppelschwenkschiebetüren, bei denen zwei Türblätter vorhanden sind, zu einem verwickelten Aufbau, der umfangreiche Justiervorgänge erforderlich macht.

Die Erfindung bezweckt die Schaffung eines Antriebes in einfacher Form und mit geringem Einzelbedarf der einzelnen Baugruppen.

Erfindungsgemäß wird dies dadurch erreicht, daß bei Türantrieben der eingangs erwähnten Art bei Anordnung zweier Türblätter, deren Linearantriebe koaxial zu einer Baueinheit zusammengefaßt sind.

In Ausgestaltung der Erfindung weisen die Linearantriebe an den einander zugekehrten Seiten einen gemeinsamen Boden auf.

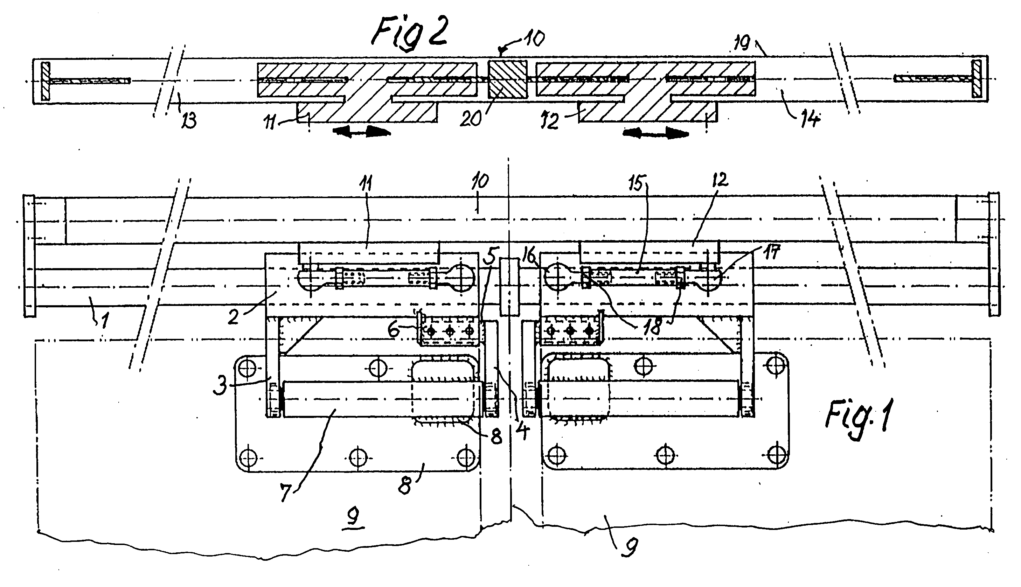

In der Zeichnung ist der Gegenstand der Erfindung in einer beispielsweisen Ausführungsform dargestellt. Es zeigen die Fig.1 eine Längsansicht des Türantriebes und die Fig. 2 einen schematischen Längsschnitt durch die zusammengefaßten Linearantriebe.

Auf einer Tragschiene 1 ist gleitend und schwenkbar ein Schlitten 2 angeordnet, der an seinem einen Ende einen Lenker 3 trägt. An seinem anderen Ende ist ein weiterer Lenker 4 vorgesehen, der einen Zapfen 5 aufweist, welcher an einer am Schlitten 2 befestigten Hülse 6 einsteckbar ist und mittels Schrauben festlegbar ist. Zwischen den Lenkern 3 und 4 ist ein Holm 7 angeordnet, der an den Enden der Lenker 3 und 4 mittels Gelenklager gelagert ist. Mit dem Holm 7 ist eine Konsole 8 verschweißt, die am Türblatt 9 angeschraubt ist. Parallel zur Tragschiene 1 ist ein Antrieb 10 angeordnet, der zwei axial bewegliche Triebansätze 11, 12 aufweist. Die Triebansätze sind je einem der beiden koaxial zueinander angeordneten Linearantriebe 13, 14 zugeordnet. Jeder Triebansatz 11,12 ist mit einem der Schlitten 2 durch eine Kuppelstange 15 verbunden, an deren Enden sich Kugelgelenke 16, 17 befinden. Die Kugelköpfe sitzen am Schlitten 2 bzw. an den Triebansätzen 11, 12. Die Kuppelstange 15 weist an ihren Stirnseiten Innenschraubgewinde auf, von denen das eine links- und das andere rechtsgängig ist. Dementsprechend sind die Kugelgelenksteile mit links- und rechtsgängigen Außengewinden versehen. Der Abstand zwischen den Kugelgelenken 16, 17 kann somit durch Drehen der Kuppelstange 15 vergrößert oder verkleinert werden. In der gewünschten Endlage werden sie durch Kontermuttern 18 gesichert. Es ist vorteilhaft, wenn die Kuppelstange 15 in der Geschlossenstellung parallel zum Antrieb 10 ist, wie dies die Fig. 1 zeigt.

Die Linearantriebe weisen einen gemeinsamen Mantel 19 und vorzugsweise einen gemeinsamen Boden 20 auf. Bei den Linearantrieben handelt es sich um kolbenstangenlose Arbeitszylinder. Es können jedoch andere Linearantriebe in gleicher Weise verwendet werden. Ebenso kann ein anderes Bewegungsübertragungselement, wie zum Beispiel Kreuzschlitten und dergleichen vorgesehen sein.

## Patentansprüche

1. Schwenkschiebetür, insbesondere für Fahrzeuge mit einer Tragschiene und einem, auf dieser gleitenden, am Türblatt mittels einer Konsole befestigten Schlitten, sowie mit einem parallel zur Tragschiene angeordneten Linearantrieb, dessen Triebansatz durch ein Bewegungsübertragungselement mit dem Schlitten verbunden ist, dadurch gekennzeichnet, daß bei Anordnung zweier Türblätter(9) deren Linearantriebe (13, 14) koaxial zu einer Baueinheit(10) zusammengefaßt sind.

2. Antrieb nach Anspruch 1, dadurch gekennzeichnet, daß die Linearantriebe(13, 14) einen gemeinsamen Mantel(19) und vorzugsweise einen gemeinsamen Boden (20) aufweisen.

## Claims

1. A swinging-sliding door, in particular for vehicles, with a support rail and a carriage sliding thereon and secured to the door leaf by means of a bracket, and also with a linear drive which is disposed parallel to the support rail (1) and the drive attachment of which is connected with the carriage by a motion-tranmitting member, characterised in that, if two door leaves (9) are provided, their linear drives (13, 14) are combined coaxially to form a unit (10).

2. A drive according to Claim 1, characterised in that the linear drives (13, 14) have a common casing (19) and preferably a common base (20).

## Revendications

1. Porte pivotante et coulissante, notamment pour véhicules, comprenant un rail porteur et un chariot coulissant sur ce rail, qui est fixé au panneau de la porte au moyen d'une console, ainsi qu'un entraînement linéaire agencé parallèlement au rail porteur dont un taquet d'entraînement est réuni au chariot par un élément de transmission du mouvement, caractérisé en ce que, dans le cas de la présence de deux panneaux de porte (9), leurs entraînements linéaires (13, 14) sont regroupés coaxialement pour former un sous-ensemble (10).

2. Entraînement selon la revendication 1, caractérisé en ce que les entraînements linéaires (13, 14) présentent un corps commun (19) et de préférence un fond commun (20).
